# EUROPÄISCHE PATENTSCHRIFT

(11) **EP 1 706 301 B1**
(45) Veröffentlichungstag und Bekanntmachung des Hinweises auf die Patenterteilung: **13.05.2009**
(21) Anmeldenummer: 04820957.1
(22) Anmeldetag: 25.11.2004
(51) Int. Cl.: B60T 8/36, F16K 31/06, B60T 15/02

(54) **VENTIL ZUM STEUERN VON FLUIDEN MIT INTEGRIERTER DRUCKAUSGLEICHSMÖGLICHKEIT**
VALVE FOR CONTROLLING FLUIDS WITH INTEGRATED PRESSURE EQUALISATION
SOUPAPE COMMANDANT DES FLUIDES AVEC POSSIBILITE DE COMPENSATION DE PRESSION INTEGREE

(30) Priorität: 10.01.2004 DE 102004001564
(43) Veröffentlichungstag der Anmeldung: 04.10.2006
(73) Patentinhaber: Robert Bosch GmbH, 70442 Stuttgart (DE)
(72) Erfinder: BUCHTALA, Boris, 75417 Muehlacker (DE); KOEDER, Thilo, 70839 Gerlingen (DE); BUCHENAU, Ingo, 71711 Steinheim (DE)
(86) Internationale Anmeldenummer: PCT/EP2004/053089
(87) Internationale Veröffentlichungsnummer: WO 2005/066003

(56) Entgegenhaltungen:
- WO-A-99/25595
- DE-A1- 19 544 257
- DE-A1- 19 739 886
- DE-A1- 19 813 184
- PATENT ABSTRACTS OF JAPAN Bd. 008, Nr. 029 (E-226), 7. Februar 1984 (1984-02-07) -& JP 58 192310 A (TOKYO SHIBAURA DENKI KK), 9. November 1983 (1983-11-09)

## Beschreibung

### Stand der Technik

Die vorliegende Erfindung betrifft ein Ventil zum Steuern von Fluiden.

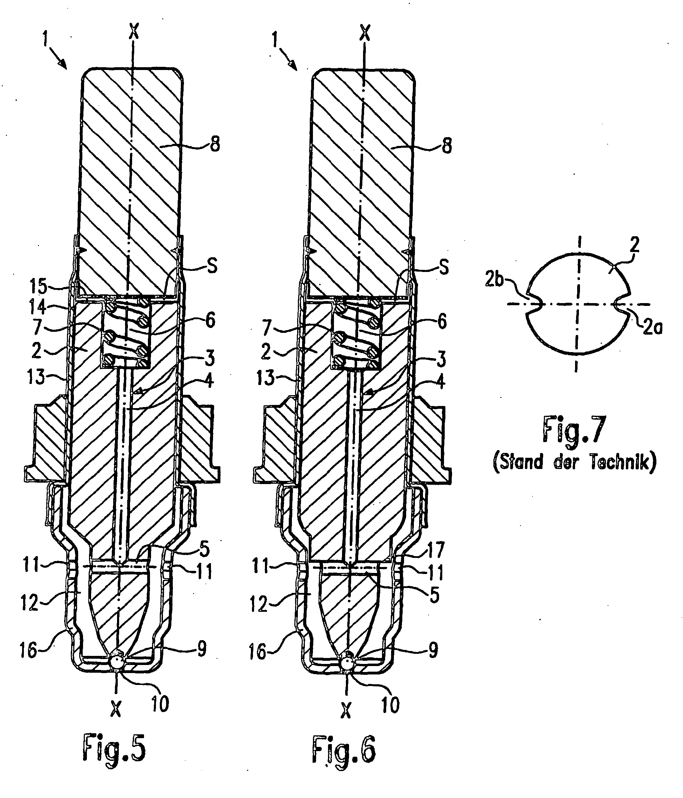

Ein derartiges Ventil ist beispielsweise aus der DE 19544257 A1 bekannt. Dieses bekannte elektromagnetisch betätigte Ventil umfasst einen Anker und einen Polkern, welche koaxial zueinander angeordnet sind. Eine Rückstellfeder ist innerhalb des Ankers angeordnet und stellt am nicht bestromten Ventil eine Rückstellung des Ankers in seine Ausgangsstellung bereit. Der Anker ist mit einem Schließglied verbunden, sodass im nicht bestromten Zustand des Ventils das Ventil geschlossen ist. Der Anker weist dabei an seinem Außenumfang zwei Druckausgleichsnuten auf, welche über die gesamte Länge des Ankers verlaufen. Der Anker 2 mit den beiden Ausgleichsnuten 2a und 2b ist in Figur 7 in Draufsicht dargestellt. Die Druckausgleichsnuten 2a, 2b stellen dabei einen Druckausgleich zwischen einem Ventilraum am Schließglied des Ventils und einem Raum zwischen dem Polkern und dem Anker bereit. Dabei muss der Anker zunächst mit den Druckausgleichsnuten als Rohling kaltgeschlagen werden und später spanend nachbearbeitet werden. Aufgrund der außen angeordneten Druckausgleichsnuten ist jedoch kein kostengünstiges, planendes Bearbeiten der zum Polkern gerichteten Fläche des Ankers möglich, da sich an den Druckausgleichsnuten Grate bilden. Das Planen der Oberfläche stellt jedoch eine Voraussetzung für das Erreichen kleiner Toleranzen dar, wodurch eine große Toleranz für eine im Anker ausgebildete Bohrung resultiert, welche das Federrückstellelement zwischen Anker und Polkern aufnimmt.

Weiterhin wird im Stand der Technik zwischen dem Anker und dem Polkern noch ein zusätzliches Bauteil in Form einer Distanzscheibe eingesetzt, welche zur Sicherstellung des Restluftspaltes dient. Die Distanzscheibe ist aus einem nicht magnetischen Werkstoff hergestellt und teilt somit bei Bestromung des Ventils einen geringen Spalt zwischen dem Polkern und dem Anker aufrecht, sodass der Anker nach dem Bestromen nicht infolge eines Restmagnetismus am Polkern kleben bleibt.

Weiterhin ergibt sich bei dem bekannten elektromagnetischen Ventil der Nachteil, dass sich in der Bohrung zur Aufnahme des Federrückstellelements Luft sammeln kann, welche im normalen Betrieb nicht aus der Bohrung herausgespült werden kann. Diese Luft kann dabei insbesondere zu Schwingungen des Ankers und somit zu einer ungewollten Geräuschentwicklung führen.

Ein Ventil zum Steuern von Fluiden nach den gattungsbildenden Merkmalen des Anspruchs 1 ist aus der DE 198 13 184 A1 bekannt.

### Vorteile der Erfindung

Das erfindungsgemäße Ventil zum Steuern von Fluiden mit den Merkmalen des Patentanspruchs 1 weist demgegenüber den Vorteil auf, dass es aus Gründen der Genauigkeit beispielsweise als Drehteil hergestellt werden kann und dabei sowohl eine Druckausgleichsfunktion als auch eine Entlüftungsfunktion bereitstellen kann. Dies wird erfindungsgemäß dadurch erreicht, dass im Inneren des Ankers des Ventils eine Bohrungsanordnung ausgebildet ist, über welche ein Druckausgleich erfolgen kann. Über dieselbe Bohrungsanordnung kann auch eine Entlüftung eines Raumes zwischen dem Ankerelement und dem Polkern, insbesondere eine Entlüftung einer Ausnehmung zur Aufnehmung eines Rückstellelementes, erfolgen. Erfindungsgemäß wird dabei unter dem Begriff Bohrungsanordnung eine kanalartige Einrichtung verstanden, welche beispielsweise mittels Bohren hergestellt werden kann. Diese kanalartige Anordnung kann jedoch auch durch andere geeignete Fertigungsverfahren wie z.B. Erodieren, Laserbohren usw. erzeugt werden. Die im Inneren des Ankerelements verlaufende Bohrungsanordnung stellt dabei eine Verbindung zwischen einem Aufnahmeraum des Rückstellelements und einem Ventilraum im Bereich des Schließelements bereit.

Die Unteransprüche zeigen bevorzugte Weiterbildungen der Erfindung.

Die erfindungsgemäße Bohrungsanordnung umfasst eine erste Bohrung im Wesentlichen in Axialrichtung des Ventils und eine zweite Bohrung im Wesentlichen senkrecht zur Axialrichtung des Ventils.

Gemäß der vorliegenden Erfindung ist die zweite Bohrung im Ankerelement in Axialrichtung des Ventils auf gleicher Höhe wie eine Abströmbohrung am Ventil angeordnet. Durch diese Positionierung der Querbohrung der Bohrungsanordnung wird die von der Längsbohrung kommende Strömung in Richtung der Abströmbohrungen im Ventil umgelenkt und beschleunigt. Dadurch entsteht ein Druckunterschied zum Raum zwischen dem Ankerelement und dem Polkern. Die Entstehung dieses Druckunterschieds beruht dabei auf der Äquivalenz von Druckenergie und kinetischer Energie. Der Differenzdruck zwischen dem Abströmbereich und dem Bereich zwischen dem Ankerelement und dem Polkern bewirkt somit den erwünschten Spüleffekt, welcher das Fluid insbesondere aus der Bohrung zur Aufnahme des Rückstellelements herausfördert. Somit wird evtl. vorhandene Luft sicher aus dem Ventil herausgebracht, sodass das Ventil sicher entlüftet ist und keine zusätzlichen und unnötigen Geräusche aufgrund der Schwingung des Ankerelements entstehen können. Um diesen Effekt noch weiter zu verstärken, ist vorzugsweise eine Strömungsablenkstufe am Austrittsbereich ausgebildet. Besonders bevorzugt ist diese Strömungsablenkstufe dabei integral am Ankerelement ausgebildet, sodass keine zusätzlichen separaten Bauteile notwendig sind.

Um insbesondere eine optimale Spülung des Aufnahmeraums für das Rückstellelement zu erhalten, ist der Aufnahmeraum vorzugsweise am Ankerelement ausgebildet. Dabei ist besonders bevorzugt die Bohrungsanordnung derart angeordnet, dass die in Axialrichtung des Ventils verlaufende erste Bohrung durch den Bodenbereich des Aufnahmeraums verläuft.

Um besonders kostengünstig herstellbar zu sein, ist das Ankerelement des erfindungsgemäßen Ventils vorzugsweise als Drehteil hergestellt. Dabei können sowohl die Außenflächen als auch insbesondere die plane, zum Polkern gerichtete Fläche des Ankerelements mit höchster Genauigkeit ohne großen Aufwand bearbeitet werden. Weiterhin wird der Aufnahmeraum für das Rückstellelement im Ankerelement sowie die in Axialrichtung verlaufende erste Bohrung der Bohrungsanordnung vorzugsweise mittels eines Stufenbohrers hergestellt. Dadurch kann auf einfachste Weise höchste Toleranzanforderungen erfüllt werden.

Gemäß einer vorteilhaften Ausbildung der vorliegenden Erfindung umfasst ein Ventil mit den Merkmalen des Patentanspruchs 8 einen am Ankerelement und/oder am Polkern ausgebildeten vorstehenden Bereich, um den Zwischenraum zwischen dem Ankerelement und dem Polkern zu definieren. Besonders bevorzugt ist dieser vorstehende Bereich dabei als ringförmig umlaufender Bund ausgebildet. Dadurch kann er beispielsweise auf einfache Weise am Ankerelement ausgebildet werden, sodass auf die im Stand der Technik verwendete Distanzscheibe verzichtet werden kann. Dadurch wird auch eine Vereinfachung der Montage erreicht. Weiterhin wird verhindert, dass nach Beendigung des Bestromens des Ventils die beiden Bauteile Polkern und Ankerelement aneinander kleben bleiben. Der ringförmig umlaufende Bund kann beispielsweise besonders einfach mittels Drehen am Ankerelement ausgebildet werden. Da der Bund immer eine relativ kleine Fläche aufweist, tritt weder ein magnetisches "Kleben" noch eine hydraulische Adhäsion auf. Die Form und Gestalt des Bundes ermöglicht dabei weiterhin die Bestimmung der exakten Lage der Polfläche, was beispielsweise bei ebenfalls im Stand der Technik bekannten Waffelungen bzw. Profilierungen nicht möglich ist.

Die erfindungsgemäßen Ventile werden insbesondere in Hydrauliksystemen von Fahrzeugen verwendet. Besonders bevorzugt werden die erfindungsgemäßen Ventile dabei in elektrohydraulischen Bremsen verwendet, wobei im nicht bestromten Zustand das Ventil in seiner Schließstellung ist.

### Zeichnung

Nachfolgend werden unter Bezugnahme auf die begleitende Zeichnung bevorzugte Ausführungsbeispiele der vorliegenden Erfindung beschrieben.

In der Zeichnung ist:
- Figur 1: eine schematische Schnittansicht eines Ventils gemäß einem ersten Ausführungsbeispiel der vorliegenden Erfindung,
- Figur 2: eine schematische Draufsicht auf ein Ankerelement, welches in einem zweiten Ausführungsbeispiel eines erfindungsgemäßen Ventils verwendet wird,
- Figur 3: eine schematische Schnittansicht des in Figur 2 gezeigten Ankerelements,
- Figur 4: eine vergrößerte Detailansicht der zum Polkern gerichteten Seite des Ankerelements,
- Figur 5: eine schematische Schnittansicht des Ventils gemäß dem zweiten Ausführungsbeispiel,
- Figur 6: eine schematische Schnittansicht eines Ventils gemäß einem dritten Ausführungsbeispiel der vorliegenden Erfindung, und
- Figur 7: eine schematische Draufsicht auf ein Ankerelement gemäß dem Stand der Technik.

### Beschreibung der Ausführungsbeispiele

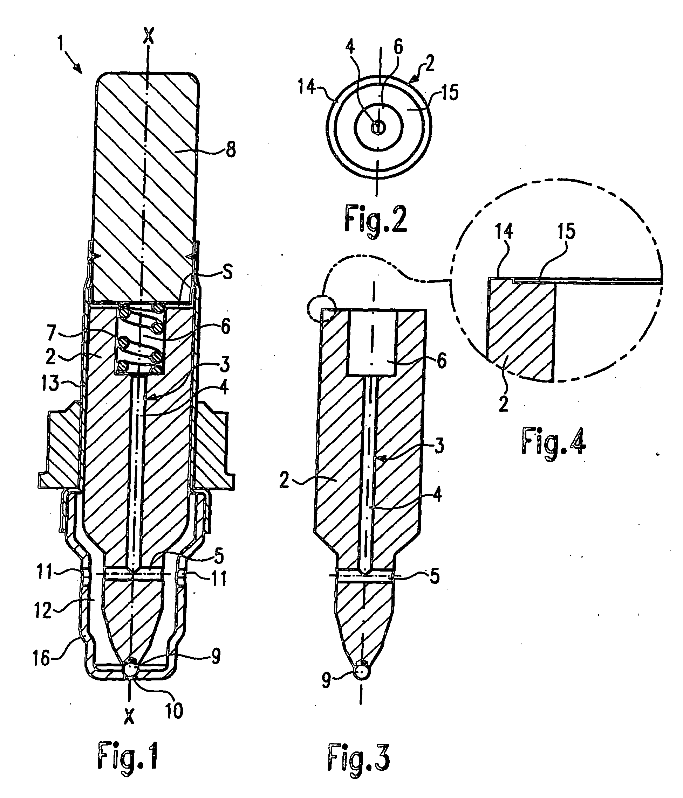

Nachfolgend wird unter Bezugnahme auf Figur 1 ein Ventil 1 gemäß einem ersten Ausführungsbeispiel der vorliegenden Erfindung beschrieben. Das Ventil 1 umfasst im Wesentlichen einen Anker 2 und einen Polkern 8. Zwischen dem Anker 2 und dem Polkern 8 ist als Rückstellelement eine Spiralfeder 7 angeordnet. Der Polkern 8 ist fest mit einer Hülse 13 verbunden, welche gleichzeitig auch als Führungselement für den Anker 2 dient. An dem dem Polkern entgegengesetzten Ende des Ankers 2 ist ein Schließelement 9 in Form einer Kugel angeordnet. Mittels der Kugel 9 kann eine Öffnung 10 in einem Ventilkörper 16 freigegeben bzw. verschlossen werden. Der Anker 2 ist durch Bestromen bzw. Nichtbestromen einer nicht dargestellten Spule in Axialrichtung X-X des Ventils 1 bewegbar.

Im nicht bestromten Zustand des Ventils befindet sich das Ventil in seiner Schließstellung. Dabei ist zwischen dem Polkern 8 und dem Anker 2 ein Spalt S ausgebildet. Weiterhin ist zwischen dem Ventilkörper 16 und dem vorderen Ende des Ankers ein Raum 12 im Bereich der Kugel 9 ausgebildet.

Zwischen dem Raum S und dem Raum 12 ist nun eine hydraulische Verbindung über eine im Inneren des Ankers 2 ausgebildete Bohrungsanordnung 3 vorhanden. Genauer umfasst die Bohrungsanordnung 3 einen Aufnahmeraum 6 für das Rückstellelement 7, eine erste Bohrung 4 und eine zweite Bohrung 5. Die erste Bohrung 4 ist als Längsbohrung ausgebildet und verläuft in Axialrichtung X-X des Ventils 1. Die zweite Bohrung 5 ist als Querbohrung ausgebildet und verläuft senkrecht zur Axialrichtung X-X des Ventils. Dabei ist die zweite Bohrung 5 als Durchgangsbohrung ausgebildet, sodass ihre beiden Enden jeweils in den Raum 12 münden. Es sei angemerkt, dass die zweite Bohrung 5 auch als Sacklochbohrung ausgebildet sein kann und somit nur an einer Stelle in den Raum 12 mündet. Somit kann erfindungsgemäß über die Bohrungsanordnung 3 ein Druckausgleich zwischen dem Raum S und dem Raum 12 erfolgen. Dadurch wird es möglich, dass der Anker 2 komplett als ein Drehteil gefertigt werden kann. Hierdurch ist es insbesondere möglich, die zum Polkern 8 gerichtete Stirnseite des Ankers 2 kostengünstig plan zu bearbeiten, sodass anschließend der Raum 6 beispielsweise mittels Bohren ausgebildet werden kann. Somit muss der Anker nicht mehr, wie bisher, als Kaltschlagteil hergestellt werden, was insbesondere aufgrund der am Außenumfang angeordneten Druckausgleichsnuten zu einer unebenen Stirnseite geführt hat, sodass ein erheblicher Nachbearbeitungsaufwand notwendig war. Dies würde auch zu einer großen Toleranz für den Aufnahmeraum für das Rückstellelement führen. Erfindungsgemäß kann diese Toleranz für den Aufnahmeraum 6 nun deutlich reduziert werden, da ein einfaches Planbearbeiten der Stirnseite des Ankers 2 möglich ist.

Wie aus Figur 1 ersichtlich ist, ist die zweite Bohrung 5 in Axialrichtung X-X des Ventils auf einer Höhe angeordnet, sodass sie der Höhe einer Abströmöffnung 11 im Ventilkörper 16 entspricht. Hierbei sind im vorliegenden Ausführungsbeispiel zwei Abströmöffnungen 11 ausgebildet.

Weiterhin wird durch die Anordnung der ersten Bohrung 4 am Boden des Aufnahmeraums 6 für das Rückstellelement 7 sichergestellt, dass eine ständige Spülung des Raumes 6 erfolgt. Dadurch wird erfindungsgemäß verhindert, dass sich Luft im Raum 6 ansammeln kann, welche zu einer Beeinträchtigung der Funktion des Ventils und insbesondere zur Entwicklung von Geräuschen führen kann.

Da erfindungsgemäß die zweite Bohrung 5 auf gleicher Höhe wie die Abströmöffnungen 11 angeordnet ist entsteht durch die Umlenkung und Beschleunigung zwischen der ersten Bohrung 4 und der zweiten Bohrung 5 ein Druckunterschied zum Aufnahmeraum 6, sodass ständig der erwünschte Spüleffekt des Raumes 6 sichergestellt werden kann. Aufgrund der Anordnung der Querbohrung 5 auf gleicher Höhe mit den Abströmöffnungen 11 wird die Beschleunigung und dadurch der Druckunterschied noch verstärkt.

Nachfolgend wird unter Bezugnahme auf die Figuren 2 bis 5 ein Ventil eines gemäß einem zweiten Ausführungsbeispiel der vorliegenden Erfindung beschrieben. Dabei sind gleiche bzw. funktional gleiche Bauteile mit den gleichen Bezugszeichen wie im ersten Ausführungsbeispiel bezeichnet.

Wie insbesondere aus Figur 5 ersichtlich ist, entspricht der Gesamtaufbau des Ventils des zweiten Ausführungsbeispiels im Wesentlichen dem ersten Ausführungsbeispiel. Im Unterschied zum ersten Ausführungsbeispiel ist beim zweiten Ausführungsbeispiel jedoch ein an der zum Polkern 8 gerichteten Stirnseite des Ankers 2 ein ringförmig umlaufender Bund 14 ausgebildet. Dieser umlaufende Bund 14 stellt sicher, dass in jeder Betriebssituation des Ventils 1 ein Restspalt 15 zwischen dem Polkern 8 und dem Anker 2 verbleibt.

Der Anker 2 mit umlaufendem Bund 14 ist in den Figuren 2 bis 4 im Detail dargestellt. Wie insbesondere aus Figur 4 ersichtlich ist, weist der Bund 14 dabei eine relativ geringe Breite auf. Der Bund 14 kann beispielsweise mittels Drehen hergestellt werden, indem der Bereich 15 aus der Stirnfläche des Ankers 2 herausgedreht wird oder kann mittels eines abgesenkten Bohrers hergestellt werden. Dabei kann der Restspalt 15 auch in einem Arbeitsschritt mittels eines Stufenbohrers bei Herstellung der Bohrungsanordnung 3 hergestellt werden.

Der am Anker 2 integrierte Bund 14 stellt dabei sicher, dass ein magnetisches "Kleben" des Ankers 2 am Polkern 8 nach Betätigung des Ventils verhindert wird. Somit kann auf die im Stand der Technik bisher verwendete Distanzscheibe zwischen dem Polkern 8 und dem Anker 2 verzichtet werden. Dadurch wird die Teilezahl des Ventils reduziert und weiterhin auch eine Montage des Ventils vereinfacht. Die relativ kleine Fläche des Bundes im Vergleich zur gesamten stirnseitigen Fläche des Ankers 2 stellt dabei sicher, dass weder ein magnetisches Kleben noch eine hydraulische Adhäsion zwischen dem Anker 2 und dem Polkern 8 auftreten kann. Ansonsten entspricht das zweite Ausführungsbeispiel dem ersten Ausführungsbeispiel, sodass auf dort gegebene Beschreibung verwiesen werden kann.

Nachfolgend wird unter Bezugnahme auf Figur 6 ein Ventil 1 gemäß einem dritten Ausführungsbeispiel der vorliegenden Erfindung beschrieben. Das dritte Ausführungsbeispiel entspricht dabei im Wesentlichen dem ersten Ausführungsbeispiel, wobei gleiche bzw. funktional gleiche Teile mit den gleichen Bezugszeichen wie im ersten Ausführungsbeispiel bezeichnet sind.

Wie in Figur 6 gezeigt, umfasst das Ventil 1 gemäß dem dritten Ausführungsbeispiel einen Anker 2, an welchem zusätzlich noch eine Strömungsumlenkstufe 17 ausgebildet ist. Genauer ist die Strömungsumlenkstufe 17 integral am Anker 2 gebildet. Wie in Figur 6 gezeigt, ist die zweite Bohrung 5 dabei unmittelbar benachbart zur Strömungsumlenkstufe 17 ausgebildet. Die Strömungsumlenkstufe 17 verstärkt dabei eine Beschleunigung des Fluids beim Umlenken von der ersten Bohrung 4 in die zweite Bohrung 5. Dadurch kann der erfindungsgemäße Effekt eines Druckunterschiedes zwischen dem Raum S und dem Raum 12 verstärkt werden, sodass eine noch größere Sicherheit hinsichtlich des Spülens des Raums 6 erhalten wird. Somit kann einerseits ein sehr schneller Druckausgleich ermöglicht werden und andererseits kann evtl. vorhandene Luft im Bereich des Rückstellelements 7 sicher aus dem Raum 6 bzw. dem Spalt S entfernt werden.

Durch die erfindungsgemäße Anordnung einer Bohrungsanordnung 3 für den Druckausgleich, welche gleichzeitig auch für eine Entlüftung des Bereichs zwischen dem Polkern 8 und dem Anker 2 verwendet werden kann, kann somit die Funktion eines Magnetventils signifikant verbessert werden. Dabei werden gleichzeitig die Herstellungskosten deutlich gesenkt, da der Anker nun nicht mehr als aufwendiges Kaltschlagteil hergestellt werden muss, sondern als Drehteil mit zylindrischem Außenumfang hergestellt werden kann. Weiterhin ergibt sich dadurch eine erhöhte Vielfalt einer Materialauswahl für den Anker 2. Die Kombination der erfindungsgemäßen Bohrungsanordnung mit dem umlaufenden Bund 14 ergibt dabei die größten Kosten- und Betriebsvorteile. Das erfindungsgemäße Ventil 1 wird insbesondere in Fahrzeugen und dabei insbesondere im Bereich von hydraulischen Bremsanlagen wie beispielsweise einer elektrohydraulischen Bremse verwendet.

## Patentansprüche

1. Ventil zum Steuern von Fluiden, umfassend einen Polkern (8), ein Ankerelement (2), welches mit einem Schließelement (9) in Verbindung steht, um einen Durchlass (10) freizugeben bzw. zu verschließen, und ein Rückstellelement (7), welches zwischen dem Ankerelement (2) und dem Polkern (8) angeordnet ist, um das Ankerelement (2) wieder in seine Ausgangsposition zurückzustellen, wobei im Inneren des Ankerelements (2) eine Bohrungsanordnung (3) ausgebildet ist, um eine Verbindung zwischen einem Raum (6, S) zwischen dem Ankerelement (2) und dem Polkern (8) und einem Raum (12) im Bereich des Schließelements (9) bereitzustellen, wobei die Bohrungsanordnung (3) eine erste Bohrung (4), welche im Wesentlichen in Axialrichtung (X-X) des Ventils verläuft, und eine zweite Bohrung (5) umfasst, welche im Wesentlichen senkrecht zur Axialrichtung (X-X) des Ventils verläuft, **dadurch gekennzeichnet,**
**dass** die zweite Bohrung (5) in Axialrichtung des Ventils auf gleicher Höhe wie eine Abströmöffnung (11) des Ventils angeordnet ist.

2. Ventil nach Anspruch 1, **dadurch gekennzeichnet,**
**dass** die zweite Bohrung (5) im Ankerelement (2) als Durchgangsbohrung ausgebildet ist.

3. Ventil nach Anspruch 1 oder 2, **dadurch gekennzeichnet,**
**dass** am Austrittsbereich der zweiten Bohrung (5) eine Strömungsumlenkstufe (17) ausgebildet ist.

4. Ventil nach Anspruch 3, **dadurch gekennzeichnet,**
**dass** die Strömungsumlenkstufe (17) integral am Ankerelement (2) ausgebildet ist.

5. Ventil nach einem der vorhergehenden Ansprüche, **dadurch gekennzeichnet,**
**dass** das Ankerelement (2) eine Ausnehmung (6) zur Aufnahme des Rückstellelements (7) aufweist.

6. Ventil nach Anspruch 5, **dadurch gekennzeichnet,**
**dass** die Bohrungsanordnung (3) die Ausnehmung (6) zur Aufnahme des Rückstellelements (7) mit umfasst, sodass ein Fluidpfad vom Raum zwischen dem Polkern (8) und dem Ankerelement (2) zum Raum (12) zumindest teilweise die Ausnehmung (6) mit umfasst.

7. Ventil nach einem der vorhergehenden Ansprüche, **dadurch gekennzeichnet,**
**dass** das Ankerelement (2) als Drehteil hergestellt ist.

8. Ventil nach einem der vorhergehenden Ansprüche, **dadurch gekennzeichnet,**
**dass** am Ankerelement (2) und/oder am Polkern (8) ein vorstehender Bereich (14) ausgebildet ist, um einen in jeder Betriebsposition vorhandenen Zwischenraum (15) zwischen dem Ankerelement (2) und dem Polkern (8) zu definieren.

9. Ventil nach Anspruch 8, **dadurch gekennzeichnet,**
**dass** der vorstehende Bereich (14) als ringförmig umlaufender Bund ausgebildet ist.

10. Verwendung eines Ventils nach einem der vorhergehenden Ansprüche in einem Bremssystem eines Fahrzeugs.

## Claims

1. Valve for the control of fluids, comprising a pole core (8), an armature element (2) which is connected to a closing element (9) in order to release or to close a passage (10), and a restoring element (7) which is arranged between the armature element (2) and the pole core (8) in order to reset the armature element (2) into its initial position again, a bore arrangement (3) being formed inside the armature element (2) in order to provide a connection between a space (6, S) between the armature element (2) and the pole core (8) and a space (12) in the region of the closing element (9), the bore arrangement (3) comprising a first bore (4), which runs essentially in the axial direction (X-X) of the valve, and a second bore (5), which runs essentially perpendicularly with respect to the axial direction (X-X) of the valve, **characterized in that** the second bore (5) is arranged at the same height as an outflow port (11) of the valve in the axial direction of the valve.

2. Valve according to Claim 1, **characterized in that** the second bore (5) is formed as a through-bore in the armature element (2).

3. Valve according to Claim 1 or 2, **characterized in that** a flow deflection step (17) is formed at the outlet region of the second bore (5).

4. Valve according to Claim 3, **characterized in that** the flow deflection step (17) is formed integrally on the armature element (2).

5. Valve according to one of the preceding claims, **characterized in that** the armature element (2) has a recess (6) for receiving the restoring element (7).

6. Valve according to Claim 5, **characterized in that** the bore arrangement (3) incorporates the recess (6) for receiving the restoring element (7), so that a fluid path from the space between the pole core (8) and the armature element (2) to the space (12) at least partially incorporates the recess (6).

7. Valve according to one of the preceding claims, **characterized in that** the armature element (2) is produced as a lathe-turned part.

8. Valve according to one of the preceding claims, **characterized in that** a projecting region (14) is formed on the armature element (2) and/or on the pole core (8), in order to define between the armature element (2) and the pole core (8) an interspace (15) which is present in any operating position.

9. Valve according to Claim 8, **characterized in that** the projecting region (14) is designed as an annularly continuous collar.

10. Use of a valve according to one of the preceding claims in a brake system of a vehicle.

## Revendications

1. Soupape de commande de fluides, comprenant un noyau polaire (8), un élément d'armature (2) qui est en liaison avec un élément de fermeture (9), afin de libérer ou de fermer un passage (10), et un élément de rappel (7) qui est disposé entre l'élément d'armature (2) et le noyau polaire (8), afin de ramener l'élément d'armature (2) à nouveau dans sa position de départ, un agencement d'alésage (3) étant réalisé à l'intérieur de l'élément d'armature (2), afin de réaliser une connexion entre un espace (6, S) entre l'élément d'armature (2) et le noyau polaire (8) et un espace (12) dans la région de l'élément de fermeture (9), l'agencement d'alésage (3) présentant un premier alésage (4) qui s'étend essentiellement dans la direction axiale (X-X) de la soupape, et un deuxième alésage (5) qui s'étend essentiellement perpendiculairement à la direction axiale (X-X) de la soupape, **caractérisée en ce que** le deuxième alésage (5) est disposé dans la direction axiale de la soupape à la même hauteur qu'une ouverture de sortie d'écoulement (11) de la soupape.

2. Soupape selon la revendication 1, **caractérisée en ce que** le deuxième alésage (5) est réalisé dans l'élément d'armature (2) sous forme d'alésage traversant.

3. Soupape selon la revendication 1 ou 2, **caractérisée en ce qu'**un étage de déviation d'écoulement (17) est réalisé au niveau de la région de sortie du deuxième alésage (5).

4. Soupape selon la revendication 3, **caractérisée en ce que** l'étage de déviation d'écoulement (17) est réalisé intégralement sur l'élément d'armature (2).

5. Soupape selon l'une quelconque des revendications précédentes, **caractérisée en ce que** l'élément d'armature (2) présente un évidement (6) pour recevoir l'élément de rappel (7).

6. Soupape selon la revendication 5, **caractérisée en ce que** l'agencement d'alésage (3) comprend l'évidement (6) pour recevoir l'élément de rappel (7), de sorte qu'un chemin de fluide allant de l'espace entre le noyau polaire (8) et l'élément d'armature (2) jusqu'à l'espace (12) comprenne au moins en partie l'évidement (6).

7. Soupape selon l'une quelconque des revendications précédentes, **caractérisée en ce que** l'élément d'armature (2) est réalisé sous forme de pièce tournante.

8. Soupape selon l'une quelconque des revendications précédentes, **caractérisée en ce qu'**une région saillante (14) est réalisée sur l'élément d'armature (2) et/ou sur le noyau polaire (8), afin de définir un espace intermédiaire (15) prévu dans chaque position fonctionnelle entre l'élément d'armature (2) et le noyau polaire (8).

9. Soupape selon la revendication 8, **caractérisée en ce que** la région saillante (14) est réalisée sous forme d'épaulement périphérique annulaire.

10. Utilisation d'une soupape selon l'une quelconque des revendications précédentes dans un système de frein d'un véhicule.
